# EUROPÄISCHE PATENTSCHRIFT

(11) **EP 1 309 478 B1**
(45) Veröffentlichungstag und Bekanntmachung des Hinweises auf die Patenterteilung: **24.11.2004**
(21) Anmeldenummer: 01971895.6
(22) Anmeldetag: 09.08.2001
(51) Int. Cl.: B60S 1/38, B60S 1/04

(54) **WISCHVORRICHTUNG**
WINDSCREEN WIPING DEVICE
DISPOSITIF ESSUIE-GLACE

(30) Priorität: 17.08.2000 DE 10040128
(43) Veröffentlichungstag der Anmeldung: 14.05.2003
(73) Patentinhaber: Valeo Systèmes d'Essuyage, 78321 Le Mesnil Saint-Denis Cedex (FR)
(72) Erfinder: EGNER-WALTER, Bruno, 74076 Heilbronn (DE)
(74) Vertreter: Jahn, Wolf-Diethart
(86) Internationale Anmeldenummer: PCT/EP2001/009199
(87) Internationale Veröffentlichungsnummer: WO 2002/014124

(56) Entgegenhaltungen:
- EP-A- 0 253 696
- DE-A- 19 734 843
- US-A- 4 969 228

## Beschreibung

Die Erfindung betrifft eine Wischvorrichtung, insbesondere für Scheiben von Kraftfahrzeugen, mit einem antreibbaren Wischarm, mit einem an dem Wischarm angeordneten, als Flachbauwischblatt ausgebildeten Wischblatt, wobei das Wischblatt ein Wischgummi mit einer Trageelementaufnahme und ein in der Trageelementaufnahme angeordnetes, als druckverteilende Federschiene ausgebildetes Trageelement umfasst, mit einer an dem Wischgummi angeordneten, auf der zu wischenden Scheibe aufliegenden Wischlippe. Bei einer derartigen, beispielsweise aus der DE-A-197 34 843 bekannten, Wischvorrichtung gewährleistet das Trageelement, bspw. in Form von ein oder zwei bandartig langgestreckten Federschienen, eine optimale Verteilung des vom Wischarm ausgehenden Wischblatt-Anpressdrucks an der zu wischenden Scheibe. Dazu ist das Trageelement im unbelasteten Zustand, wenn also das Wischblatt nicht an der Scheibe anliegt, entsprechend vorgebogen und weist eine Krümmung auf. Das Trageelement einer derartigen Wischvorrichtung ersetzt somit die aufwendige Tragbügelkonstruktion mit mehreren Bügeln und Krallenbügeln, wie sie bspw. aus der DE-A-1 505 397 bekannt geworden ist.

Die Erfindung schließt weiterhin Entlastungsmittel ein, die in einer Parkstellung der Wischvorrichtung die Wischlippe entlasten und vorzugsweise die Wischlippe von der zu wischenden Scheibe abheben.

Aus der EP-A-0 253 696 ist eine Wischvorrichtung bekannt, die im Gegensatz zu der erfindungsgemäßen Wischvorrichtung nicht ein Flachbauwischblatt entsprechend DE-A-19 734 843 umfasst, sondern ein Wischblatt mit einer Tragbügelkonstruktion entsprechend DE-A-1 505 397. Die Wischvorrichtung entsprechend EP-A-0 253 696 weist Entlastungsmittel auf, welche in einer Parkstellung der Wischvorrichtung die Wischlippe entlasten und vorzugsweise die Wischlippe von der zu wischenden Scheibe abheben. Zu den Entlastungsmitteln gehören zwei Rampen, die im Abstand voneinander am Rand der zu wischenden Scheibe angeordnet sind. Als weiterer Bestandteil der Entlastungsmittel ist eine formstabile Spoilerleiste am Hauptbügel der Wischblatt-Bügelkonstruktion befestigt, die mit ihrer unteren, der Scheibe nahe liegenden Kante in der Parkstellung auf die Abheberampen auffährt.

Derartige Entlastungsmittel eignen sich allerdings nicht für eingangs beschriebene Wischvorrichtungen, die ein Flachbauwischblatt entsprechend DE-A-197 34 843 mit einem Trageelement in Form einer vorgebogenen Federschiene umfassen.

Der vorliegenden Erfindung liegt deshalb die Aufgabe zugrunde, eine Wischvorrichtung ohne eine Tragbügel- und Krallenbügelkonstruktion bereitzustellen, bei der Entlastungsmittel vorgesehen sind, die die Wischlippe in einer Parkstellung der Wischvorrichtung entlasten und vorzugsweise von der zu wischenden Scheibe abheben.

Diese Aufgabe wird bei einer Wischvorrichtung nach dem Oberbegriff des Anspruchs 1, die jener nach DE-A-19 734 843 gattungsgemäß ausgebildet ist, erfindungsgemäß dadurch gelöst, dass zu den Entlastungsmitteln weiterhin wenigstens zwei Nocken gehören, die mit Abstand zueinander an der als Federschiene ausgebildeten Trageelement angeordnet sind und die in der Parkstellung zur Entlastung der Wischlippe auf die wenigstens zwei an der Scheibe oder oder im Bereich um die Scheibe vorhandenen Rampen auffahren.

Eine derartige Wischvorrichtung hat insbesondere den Vorteil, dass bei entsprechender Beabstandung der vorgesehenen Nocken durch das Auffahren der Nocken auf die Rampen zum Abheben der Wischlippe von der zu wischenden Scheibe lediglich ein Höhenunterschied von wenigen Millimetern überwunden werden muss. Die Anzahl der zu verwendenden Nocken ist dabei von der Art der Vorbiegung des wenigstens einen Trageelements sowie von der Länge des Wischblatts in Längsrichtung abhängig. Vorteilhafterweise können deshalb mehr als zwei Nocken, bspw. drei, vier oder fünf Nocken erfindungsgemäß Verwendung finden. Die Lage der Nocken ist dabei gemäß einer Weiterbildung der Erfindung so gewählt, dass eine gleichmäßige Entlastung über die gesamte Länge des Wischgummis erfolgt.

Die Nocken sowie die Rampen können vorteilhafterweise aus Kunststoff sein. Bei mittiger Anlenkung des Wischblattes an den Wischarm und bei einer spiegelsymmetrischen Vorbiegung des Trageelementes um die Mitte des Wischblatts sind die Nocken vorteilhafterweise symmetrisch rechts und links neben der Mitte des Wischblatts angeordnet. Vorteilhafterweise befinden sich die Nocken auf der den Rampen zugewandten Seiten des Wischblatts. Wenn außerdem nur zwei Nocken und zugehörige Rampen verwendet werden, wird empfohlen, diese gemäß einer anderen Weiterbildung der Erfindung jeweils bei etwa einem Viertel der gestreckten Länge des Trageelementes vorzusehen.

Bei einer besonders vorteilhaften Ausgestaltung der Erfindung umfassen die Rampen einen schräg zu der Scheibenoberfläche verlaufenden Auffahrabschnitt und einen vorzugsweise weitgehend parallel zu der Scheibenoberfläche verlaufenden Parkabschnitt. Bei Aufliegen der Nocken auf dem Parkabschnitt wird gewährleistet, dass die Nocken und somit das Wischblatt nicht entlang dem Auffahrabschnitt zurück auf die zu wischende Scheibe gleitet. Um ein unerwünschtes Verfahren der Nocken aus dem Parkabschnitt zu unterbinden, kann außerdem erfindungsgemäß vorgesehen sein, dass die Parkabschnitte der Rampen Einwölbungen oder Vertiefungen aufweisen, in welcher die Nocken in Parkstellung gehalten werden.

Vorteilhafterweise kann erfindungsgemäß vorgesehen sein, dass das Trageelement Aussparungen zur Anordnung und Halterung der Nocken an dem Trageelement aufweist. Dabei ist bspw. denkbar, dass die Nocken aus Kunststoff sind und an das Trageelement mittels Rastelementen rastbar angeordnet sind. Andererseits ist auch denkbar, dass die Nocken unmittelbar an die Aussparungen des Trageelements angeformt bzw. angegossen werden.

Bei einer besonders bevorzugten Ausgestaltung der Erfindung weist der von der Scheibe abgewandte Bereich des Wischgummis einen spoilerartigen Ansatz auf. Dadurch wird insbesondere bei höheren Fahrzeuggeschwindigkeiten der Wischblatt-Anpressdruck auf die zu wischende Scheibe erhöht.

Erfindungsgemäß kann auch vorgesehen sein, dass die Nocken je einen den der Scheibe abgewandten Bereich des Wischblatts umgreifenden Befestigungsabschnitt umfassen. Ein solcher Befestigungsabschnitt hat dabei den Vorteil, dass die Nocken sehr stabil und damit funktionssicher an das Wischblatt angebunden werden können.

Bei einer besonders bevorzugten Ausführungsform der Erfindung umfasst das Wischgummi als Trageelementaufnahme zwei einander gegenüberliegende sich in Längsrichtung erstreckende Längsnuten und ein Trageelement in Form von zwei in den Längsnuten angeordneten, bandartig langgestreckten Federschienen. Ein derartiges Wischblatt hat sich insbesondere in der Praxis als besonders vorteilhaft erwiesen. Vorteilhafterweise kann hierbei vorgesehen sein, dass der Befestigungsabschnitt die einander abgewandten Längsseiten der Federschienen um- und/oder hintergreift. Somit ist ein funktionssicheres Befestigen der Nocken an einer Wischvorrichtung, die zwei Federschienen aufweist, gewährleistet. Weiterhin können bspw. die die Federschienen hintergreifenden Abschnitte an den Federschienen verrastbar gehaltert sein.

Eine Weiterbildung der Erfindung, gemäß welcher die Nocken und die Rampen mit sich gegenseitig abstoßenden Magneten versehen oder als sich gegenseitig abstoßende Magnete ausgebildet sind, hat den Vorteil, dass die Nocken berührungsfrei oder im wesentlichen berührungsfrei auf die Rampen aufgleiten können, wodurch unerwünschte Geräusche vermieden werden.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Fig. 1: eine schematische Darstellung einer erfindungsgemäßen Wischvorrichtung in unbelastetem Zustand,
- Fig. 2: eine Wischvorrichtung gemäß Fig. 1 in Parkstellung,
- Fig. 3: einen Querschnitt durch eine erfindungsgemäße Wischvorrichtung,
- Fig. 4: einen Querschnitt durch eine zweite erfindungsgemäße Wischvorrichtung, und
- Fig. 5: die Draufsicht der in Fig. 4 dargestellten Wischvorrichtung.

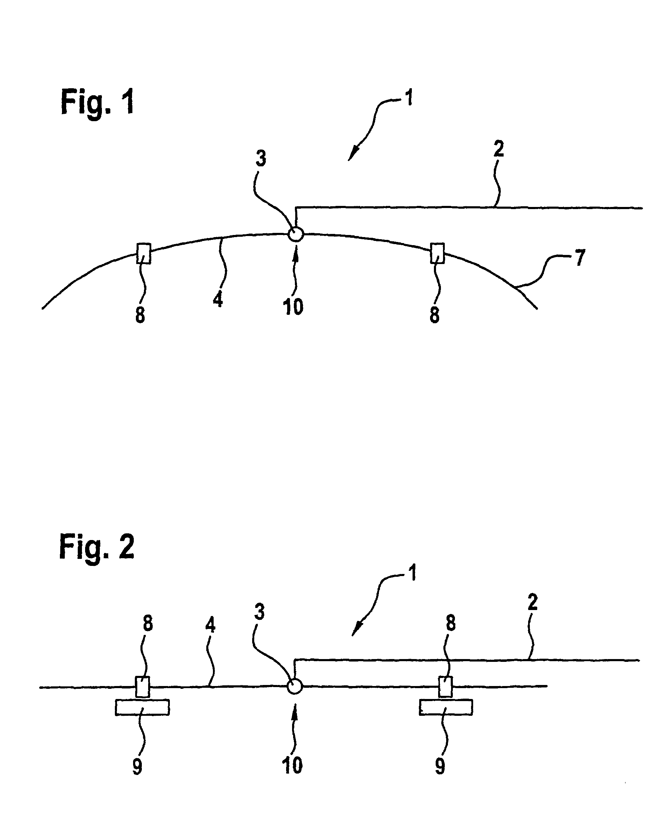

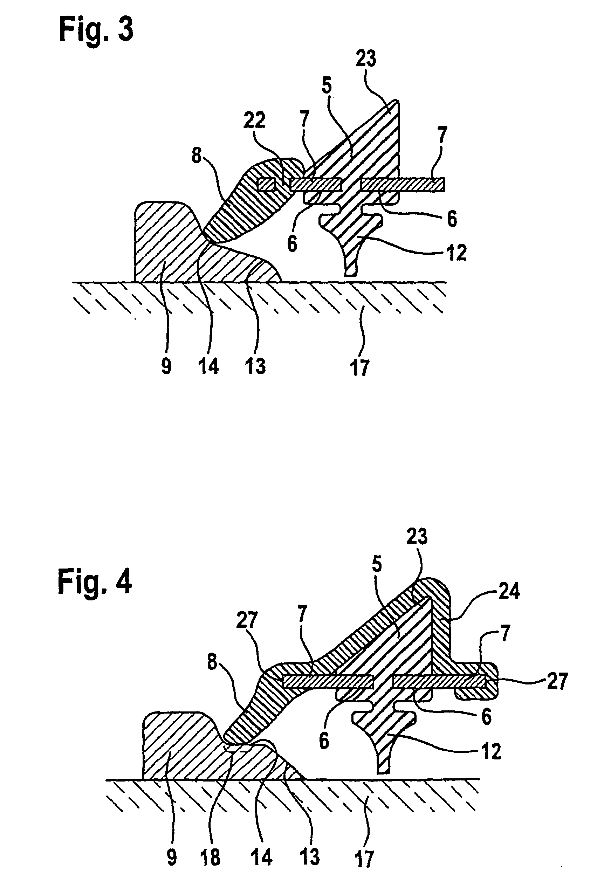

Die in der Fig. 1 dargestellte Wischvorrichtung 1 zur Wischung von einer in den Fign. 1 und 2 nicht dargestellten Scheibe, insbesondere eines Kraftfahrzeuges, weist einen antreibbaren Wischarm 2 und ein an dem Wischarm 2 mittels eines Adapterelements 3 angeordnetes Wischblatt 4 auf. Das Wischblatt 4 umfasst dabei, wie aus den Fign. 3, 4 und 5 hervorgeht, ein Wischgummi 5 mit zwei Aufnahmen in Form von zwei einander gegenüberliegenden, sich in Längsrichtung erstreckenden Längsnuten 6. In den Längsnuten 6 sind zwei Trageelemente in Form von zwei langgestreckten Federschienen 7 angeordnet. Wie aus Fig. 1 deutlich hervorgeht, weisen die Federschienen 7 in unbelastetem Zustand, wenn also das Wischblatt 4 nicht an der zu wischenden Scheibe aufliegt, eine Vorkrümmung auf. Aufgrund dieser Vorkrümmung wird beim Andrücken des Wischblatts 4 ein gewünschter, bspw. gleichmäßiger Wischblatt-Anpressdruck an die zu wischende Scheibe erreicht.

Die in den Fign. 1 und 2 gezeigte Wischvorrichtung 1 umfasst außerdem zwei mit Abstand zueinander an den Federschienen 7 angeordnete Nocken 8 und mit den Nocken 8 zusammenwirkende, vorzugsweise an der Scheibe oder im Bereich um die zu wischende Scheibe vorhandene Rampen 9.
In der Fig. 2 ist die Wischvorrichtung 1 in Parkstellung gezeigt. Hierbei sind die Nocken 8 auf die Rampen 9 aufgefahren, wodurch eine Entlastung des Wischgummis 5 bzw. einer an dem Wischgummi 5 angeordneten, in den Fign. 3 - 5 dargestellten Wischlippe 12 erreicht wird. Bei einer entsprechenden Anordnung der Nocken 8 auf dem Wischblatt 4 wird bereits bei Verwendung von lediglich zwei Nocken 8 eine sich über das gesamte Wischblatt 4 erstreckende, gleichmäßige Entlastung erzielt. Wenn, wie im Beispiel der Figur 2, das Wischblatt 4 etwa mit seiner Mitte 10 an den Wischarm 2 angelenkt ist, sollten die Nocken 8 vorteilhafterweise jeweils bei einem Viertel der gestreckten Länge der Federschiene 7 angeordnet sein.

Allerdings kann auch vorgesehen sein, dass anstelle von zwei Nocken 8 weitere Nocken vorhanden sein können, um eine optimale und sehr gleichmäßige Entlastung zu erreichen, wobei vorteilhafterweise in der Parkstellung die Wischlippe 12 über die gesamte Länge des Wischblatts 4 von der zu wischenden Scheibe abgehoben wird.

In den Fign. 3 und 4 ist die zu wischende Scheibe mit der Bezugszahl 17 gekennzeichnet, wobei die Rampen 9 unmittelbar auf der Scheibe angeordnet sind. Die Rampen 9 weisen hierbei einen Auffahrabschnitt 13 sowie einen Parkabschnitt 14 auf.

Im Gegensatz zu der Ausführungsform gemäß Fig. 3 weist die Rampe 9 in Fig. 4 einen Parkabschnitt 14 auf, der weitgehend parallel zu der zu wischenden Scheibe 17 verläuft. Wie in Fig. 4 mit einer gestrichelten Linie 18 angedeutet ist, kann bei einer weiteren Ausführungsform der Erfindung vorgesehen sein, dass der Parkabschnitt 14 eine Einwölbung oder Vertiefung aufweist, um das Wischblatt 4 in der Parkstellung zu sichern.

Durch die erfindungsgemäße Anordnung der Nocken 8 und der Rampen 9 ist der über den Auffahrabschnitt 13 zu überwindende Höhenunterschied sehr gering. Die Bauhöhe der erfindungsgemäßen Wischvorrichtung 1 kann deshalb in der Parkstellung sehr gering ausfallen, was vorteilhafterweise auch zu einer sehr flachen Wischvorrichtung 1 führt.

Bei der in Fig. 3 gezeigten Ausführungsform der Erfindung ist der Nocken 8, der vorzugsweise aus Kunststoff ist, an die der Rampe 9 zugewandte Federschiene 7 angeformt. Um eine dauerhafte Verbindung zwischen dem Nocken 8 und der Federschiene 7 herzustellen, weist die Federschiene 7 eine Aussparung in Form eines Stanzloches 22 auf, welches von dem Nocken 8 ausgefüllt ist.

Wie aus Fig. 3 als auch aus Fig. 4 deutlich hervorgeht, weist der der zu wischenden Scheibe 17 abgewandte Bereich des Wischgummis 5 einen spoilerartigen Ansatz 23 auf. Aufgrund der den spoilerartigen Ansatz 23 anströmenden Luft wird insbesondere bei höheren Fahrzeuggeschwindigkeiten der Wischblatt-Anpressdruck erhöht. Vorteilhafterweise kann die der anströmenden Luft zugewandte Oberfläche des Nockens 8 entsprechend dem spoilerartigen Ansatz 23 ausgebildet sein, wodurch eine zusätzliche Erhöhung des Wischblatt-Anpressdrucks erreicht werden kann.

Bei der in Fig. 4 dargestellten Ausführungsform der Erfindung weist der Nocken 8 einen den spoilerartigen Ansatz 23 umgreifenden Befestigungsabschnitt 24 auf. Der Befestigungsabschnit 24 um- und hintergreift hierbei die voneinander abgewandten Längsseiten 27 der Federschienen 7. Dadurch wird eine dauerhafte und funktionssichere Anordnung des Nockens 8 an dem Wischblatt 4 bzw. an dem Trageelement in Form von zwei Federschienen 7 gewährleistet. Durch die einstückige Ausführung des Nockens 8 mit dem Befestigungsabschnitts 24 kann die der anströmenden Luft zugewandte Oberfläche des Nockens 8 mit dem Befestigungsabschnitt 24 strömungstechnisch günstig ausgebildet werden.

Wie aus Fig. 3 und Fig. 4 deutlich hervorgeht, wird die Wischlippe 12 in den dargestellten Parkstellungen von der zu wischenden Scheibe 17 abgehoben.

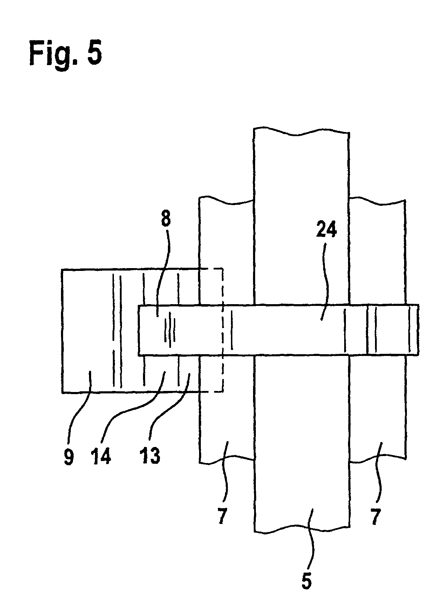

Fig. 5 zeigt den an den Federschienen 7 angeordneten Nocken 8 mit Befestigungsabschnitt 24 in Draufsicht. Deutlich zu erkennen ist, dass die dargestellte Rampe 9 etwas breiter ausgeführt ist als der Nocken 8, wodurch ein sicheres Auffahren des Nockens 8 über den Auffahrabschnitt 13 auf den Parkabschnitt 14 gewährleistet wird.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Wischvorrichtung (1), insbesondere für Scheiben (17) von Kraftfahrzeugen, mit einem antreibbaren Wischarm (2), mit einem an dem Wischarm (2) angeordneten, als Flachbauwischblatt ausgebildeten Wischblatt (4), wobei das Wischblatt (4) ein Wischgummi (5) mit einer Trageelementaufnahme (6) und ein in der Trageelementaufnahme (6) angeordnetes Tragelement umfasst, welches als im unbelasteten Zustand im Verhältnis zu der zu wischenden Scheibe eine konkave Krümmung aufweisende druckverteilende Federschiene (7) ausgebildet ist, mit einer an dem Wischgummi (5) angeordneten, auf der zu wischenden Scheibe (17) aufliegenden Wischlippe (12) und mit Entlastungsmitteln, die in einer Parkstellung der Wischvorrichtung (1) die Wischlippe (12) entlasten und vorzugsweise die Wischlippe (12) von der zu wischenden Scheibe (17) abheben, wobei zu den Entlastungsmitteln wenigstens zwei an der Scheibe (17) oder im Bereich um die Scheibe vorhandene Rampen (9) gehören, **dadurch gekennzeichnet, dass** zu den Entlastungsmitteln weiterhin wenigstens zwei Nocken (8) gehören, die mit Abstand zueinander an der Federschiene (7) des Flachbauwischblattes angeordnet sind und die in der Parkstellung zur Entlastung der Wischlippe (12) auf die Rampen (9) auffahren.

2. Wischvorrichtung (1) nach Anspruch 1, **dadurch gekennzeichnet, dass** die Nocken (8) in Längsrichtung des Wischblattes (4) in einem solchen Abstand voneinander angeordnet sind, dass in der entlasteten Parkstellung die Wischlippe (12) über den Verlauf ihrer gesamten Länge annähernd gleichmäßig entlastet ist.

3. Wischvorrichtung (1) nach einem der vorhergehenden Ansprüche, **dadurch gekennzeichnet, dass** bei mittiger Anlenkung des Wischblattes (4) an den Wischarm (2) und bei zumindest annähernd spiegelsymmetrischer Vorbiegung der Federschiene (7) bzw. Federschienen (7) um die Mitte (10) des Wischblattes die Nocken (8) beiderseits neben der Mitte (10) des Wischblattes (4) entsprechend spiegelsymmetrisch verteilt sind.

4. Wischvorrichtung (1) nach Anspruch 3, **dadurch gekennzeichnet, dass** bei Verwendung von zwei Entlastungsmitteln diese jeweils bei etwa einem Viertel der gestreckten Länge der Federschiene (7) angeordnet sind.

5. Wischvorrichtung (1) nach einem der vorhergehenden Ansprüche, **dadurch gekennzeichnet, dass** die Rampen (9) einen schräg zu der Oberläche der Scheibe (17) verlaufenden Auffahrabschnitt (13) und einen vorzugsweise weitgehend parallel zu der Scheibenoberläche verlaufenden Parkabschnitt (14) umfassen.

6. Wischvorrichtung (1) nach Anspruch 5, **dadurch gekennzeichnet, dass** die Parkabschnitte (14) der Rampen (9) eine Einwölbung (18) aufweisen.

7. Wischvorrichtung (1) nach einem der vorhergehenden Ansprüche, **dadurch gekennzeichnet, dass** das Trageelement (7) Aussparungen (22) zur Anordnung der Nocken (8) aufweist.

8. Wischvorrichtung (1) nach einem der vorhergehenden Ansprüche, **dadurch gekennzeichnet, dass** der der Scheibe (17) abgewandte Bereich des Wischgummis (5) einen spoilerartigen Ansatz (23) aufweist.

9. Wischvorrichtung (1) nach einem der vorhergehenden Ansprüche, **dadurch gekennzeichnet, dass** die Nocken (8) je einen den der Scheibe (17) abgewandten Bereich des Wischblatts (4) umgreifenden Befestigungsabschnitt (24) umfassen.

10. Wischvorrichtung (1) nach einem der vorhergehenden Ansprüche, **dadurch gekennzeichnet, dass** das Wischgummi (5) als Trageelementaufnahme zwei einander gegenüberliegende, sich in Längsrichtung erstreckende Längsnuten (6) und ein Trageelement in Form von zwei in den Längsnuten (6) angeordneten, bandartig langgestreckten Federschienen (7) umfasst.

11. Wischvorrichtung nach Anspruch 9 und 10, **dadurch gekennzeichnet, dass** der Befestigungsabschnitt (24) die voneinander abgewandten Längsseiten (27) der Federschienen (7) um- und/oder hintergreift.

12. Wischvorrichtung (1) nach einem der vorhergehenden Ansprüche, **dadurch gekennzeichnet, dass** die Nocken (8) und die Rampen (9) mit sich gegenseitig abstoßenden Magneten versehen oder als sich gegenseitig abstoßende Magnete ausgebildet sind.

## Claims

1. Wiper device (1), in particular for motor vehicle windscreens (17), having a drivable wiper arm (2), having a wiper blade (4) arranged on the wiper arm (2), said wiper blade being designed as a flat wiper blade, wherein the wiper blade (4) comprises a wiper blade rubber (5) with a support element receiver (6) and a support element arranged in the support element receiver (6), which support element is designed, in the unbiased state, in relation to the windscreen that is to be wiped, as a pressure-distributing spring blade (7) of concave curvature, having a wiper lip (12) which is arranged on the wiper blade rubber (5) and bears against the windscreen (17) that is to be wiped, and having load-relief means which in a parked position of the wiper device (1) relieve the load on the wiper lip (12) and preferably lift the wiper lip (12) off the windscreen (17) that is to be wiped, wherein the load-relief means comprise at least two ramps (9) present on the windscreen (17) or in the region around the windscreen, **characterized in that** the load-relief means furthermore comprise at least two cams (8) which are arranged on the spring blade (7) of the flat wiper blade at a distance from one another and in the parked position ride up onto the ramps (9) in order to relieve the load on the wiper lip (12).

2. Wiper device (1) according to Claim 1, **characterized in that** the cams (8) are arranged in the longitudinal direction of the wiper blade (4) at such a distance from one another that in the unloaded parked position the wiper lip (12) is relieved of load approximately uniformly over its entire length.

3. Wiper device (1) according to either of the preceding claims, **characterized in that**, with the wiper blade (4) articulated at the centre of the wiper arm (2) and with at least approximately symmetrical pre-curvature of the spring blade (7) or spring blades (7) around the centre (10) of the wiper blade, the cams (8) are correspondingly distributed symmetrically on either side of the centre (10) of the wiper blade (4).

4. Wiper device (1) according to Claim 3, **characterized in that**, when two load-relief means are used, these are arranged in each case at about one quarter of the extended length of the spring blade (7).

5. Wiper device (1) according to any of the preceding claims, **characterized in that** the ramps (9) comprise a ride up section (13) which runs obliquely with respect to the surface of the windscreen (17) and a parking section (14) which preferably runs essentially parallel to the surface of the windscreen.

6. Wiper device (1) according to Claim 5, **characterized in that** the parking sections (14) of the ramps (9) have an indent (18).

7. Wiper device (1) according to any of the preceding claims, **characterized in that** the support element (7) has cut-outs (22) to locate the cams (8).

8. Wiper device (1) according to any of the preceding claims, **characterized in that** the region of the wiper blade rubber (5) facing away from the windscreen (17) has a spoiler-like projection (23).

9. Wiper device (1) according to any of the preceding claims, **characterized in that** the cams (8) each comprise an attachment section (24) which surrounds the region of the wiper blade (4) facing away from the windscreen (17).

10. Wiper device (1) according to any of the preceding claims, **characterized in that** the wiper blade rubber (5) comprises, as support element receiver, two longitudinal grooves (6) which lie opposite one another and extend in the longitudinal direction and a support element in the form of two strip-like elongate spring blades (7) which are arranged in the longitudinal grooves (6).

11. Wiper device (1) according to Claims 9 and 10, **characterized in that** the attachment section (24) engages around and/or behind the longitudinal sides (27) of the spring blades (7) which face away from one another.

12. Wiper device (1) according to any of the preceding claims, **characterized in that** the cams (8) and the ramps (9) are provided with mutually repelling magnets or are designed as mutually repelling magnets.

## Revendications

1. Dispositif d'essuyage (1), en particulier pour pare-brise (17) de véhicules automobiles, lequel dispositif d'essuyage comporte un bras d'essuyage (2) apte à être entraîné, une raclette d'essuyage (4) conformée en raclette d'essuyage de construction plate et disposée sur le bras d'essuyage (2), la raclette d'essuyage (4) comportant un caoutchouc d'essuyage (5) doté d'un logement (6) pour élément de support et un élément de support disposé dans le logement (6) pour élément de support et conformé en lame flexible (7) à répartition de pression présentant une courbure concave à l'état non contraint par rapport au pare-brise à essuyer, une lèvre d'essuyage (12) placée sur le caoutchouc d'essuyage (5) et portant sur le pare-brise à essuyer (17) et des moyens de soulagement qui soulagent la lèvre d'essuyage (12) lorsque le dispositif d'essuyage (1) est dans une position de rangement et soulèvent avantageusement la lèvre d'essuyage (12) du pare-brise (17) à essuyer, les moyens de soulagement possédant au moins deux rampes qui sont placées au niveau du pare-brise (17) ou dans la région autour du pare-brise,
**caractérisé en ce qu'**il est associé aux moyens de soulagement au moins deux mentonnets (8) qui sont disposés à distance l'un de l'autre sur la lame flexible (7) de la raclette d'essuyage de construction plate et qui remontent dans la position de rangement sur les deux rampes (9) afin de soulager la lèvre d'essuyage (12).

2. Dispositif d'essuyage (1) selon la revendication 1, **caractérisé en ce que** les mentonnets (8) sont placés dans la direction longitudinale de la raclette (4) à distance l'un de l'autre telle que, dans la position de rangement soulagé, la lèvre d'essuyage (12) est soulagée de façon à peu près uniforme sur toute sa longueur.

3. Dispositif d'essuyage (1) selon l'une des revendications précédentes, **caractérisé en ce que**, lorsque la raclette d'essuyage (4) est articulée au milieu sur le bras d'essuyage (2) et que la lame flexible (7), respectivement, les lames flexibles (7) est (sont) précambrée(s) au moins à peu près en symétrie de miroir autour du milieu (10) de la raclette d'essuyage, les mentonnets (8) sont répartis de façon appropriée en symétrie de miroir des deux côtés du milieu (10) de la raclette d'essuyage (4).

4. Dispositif d'essuyage (1) selon la revendication 3, **caractérisé en ce que**, lorsque l'on utilise deux moyens de soulagement, ceux-ci sont disposés à peu près au quart de la longueur de flambage de la lame flexible (7).

5. Dispositif d'essuyage (1) selon l'une des revendications précédentes, **caractérisé en ce que** les rampes (9) comportent une portion de remontée (13) inclinée par rapport à la surface du pare-brise (17) et une portion de rangement (14) s'étendant avantageusement en grande partie parallèlement à la surface du pare-brise.

6. Dispositif d'essuyage (1) selon la revendication 5, **caractérisé en ce que** les portions de rangement (14) des rampes (9) présentent une incurvation (18).

7. Dispositif d'essuyage (1) selon l'une des revendications précédentes, **caractérisé en ce que** l'élément de support (7) comporte des évidements (22) destinés à recevoir les mentonnets (8).

8. Dispositif d'essuyage (1) selon l'une des revendications précédentes, **caractérisé en ce que** la région du caoutchouc d'essuyage (5), opposée au pare-brise (17), comporte une pièce rapportée de type déflecteur (23).

9. Dispositif d'essuyage (1) selon l'une des revendications précédentes, **caractérisé en ce que** les mentonnets (8) comportent chacun une portion de fixation (24) entourant la région de la raclette d'essuyage (4) qui est opposée au pare-brise (17).

10. Dispositif d'essuyage (1) selon l'une des revendications précédentes, **caractérisé en ce que** le caoutchouc d'essuyage (5) comporte en tant que logement pour élément de support deux gorges longitudinales (6) opposées l'une à l'autre et s'étendant dans la direction longitudinale et un élément de support se présentant sous la forme de deux lames flexibles (7) allongées en ruban et placées dans les gorges longitudinales (6).

11. Dispositif d'essuyage selon les revendications 9 et 10, **caractérisé en ce que** la portion de fixation (24) s'engage autour et/ou en arrière des côtés longitudinaux (27), opposés l'un à l'autre, des lames flexibles (7).

12. Dispositif d'essuyage (1) selon l'une des revendications précédentes, **caractérisé en ce que** les mentonnets (8) et les rampes (9) sont dotés d'aimants qui se repoussent mutuellement ou bien sont conformés en aimants qui se repoussent mutuellement.
